# EUROPÄISCHE PATENTSCHRIFT

(11) **EP 1 343 607 B1**
(45) Veröffentlichungstag und Bekanntmachung des Hinweises auf die Patenterteilung: **31.01.2007**
(21) Anmeldenummer: 01272035.5
(22) Anmeldetag: 20.12.2001
(51) Int. Cl.: B23K 26/12

(54) **PROZESSGAS UND VERFAHREN ZUM LASERBEARBEITEN**
PROCESS GAS AND LASER MACHINING METHOD
GAZ DE PROCEDE ET PROCEDE D'USINAGE AU LASER

(30) Priorität: 22.12.2000 DE 10064327; 22.12.2000 DE 10064325
(43) Veröffentlichungstag der Anmeldung: 17.09.2003
(73) Patentinhaber: Linde Aktiengesellschaft, 65189 Wiesbaden (DE)
(72) Erfinder: DANZER, Wolfgang, 84405 Dorfen (DE)
(74) Vertreter: Kasseckert, Rainer
(86) Internationale Anmeldenummer: PCT/EP2001/015127
(87) Internationale Veröffentlichungsnummer: WO 2002/051579

(56) Entgegenhaltungen:
- EP-A- 0 990 480
- EP-A- 1 022 087
- US-A- 5 558 786
- US-A- 5 653 896

## Beschreibung

Die Erfindung betrifft ein Verfahren zum Laserbearbeiten von Werkstoffen, wie Laserschweißen oder Laserstrahlschmelzschneiden, wobei ein fokussierter Laserstrahl auf die zu bearbeitende Werkstückoberfläche geführt wird und ein Prozessgasstrom gegen die Werkstückoberfläche geleitet wird.

Die Eigenschaften der Laserstrahlung, insbesondere die Intensität und gute Fokussierbarkeit, haben dazu geführt, dass Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit CNC-Steuerungen von Führungsmaschinen für x-y-Schneidrichtung eingesetzt. Beim Laserstrahlschneiden finden immer häufiger auch Handhabungssysteme von dreidimensionalen Werkstücken Verwendung. Eine automatische Schneidparameterzuordnung (Laserleistung angepasst an die jeweilige Schnittgeschwindigkeit während des Schneidprozesses) bezogen auf die zu schneidende Konturform ist in der Regel Voraussetzung für eine gute Schnittqualität auch an scharfen Ecken und spitzen Winkeln.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden daher technische Gase eingesetzt, um diese Materialbearbeitungsprozesse effektiver, schneller und/oder mit verbesserter Qualität durchführen zu können.

Das Laserstrahlschneiden ist das weltweit am häufigsten eingesetzte Laserbearbeitungsverfahren. Beispielsweise werden in Deutschland über 80 % der Laserbearbeitungsanlagen zum Schneiden verwendet. Beim Laserstrahlschneiden wird zwischen den Varianten Laserstrahlbrennschneiden, Laserstrahlschmelzschneiden und Laserstrahlsublimierschneiden unterschieden. Beim Laserstrahlschmelzschneiden wird der Werkstoff durch die Laserstrahlung im Trennfleck aufgeschmolzen. Die Schmelze wird mit einem Prozessgas aus der Schnittfuge ausgetrieben. Das Laserstrahlschmelzschneiden mit Prozessgas unter Hochdruck hat sich beim Schneiden von Edelstählen durchgesetzt, wird aber teilweise auch bei anderen Werkstoffen wie Baustählen oder Aluminium verwendet. Als Prozessgas für das Laserstrahlschmelzschneiden wird üblicherweise ein Inertgas verwendet.

Beim Laserstrahlschweißen erfüllen Prozessgase verschiedene Aufgaben. Die Kontrolle und Reduzierung des Plasmas ist bei hohen Laserleistungen zwingend. Dies ist beispielsweise aus der Veröffentlichung "Laser im Nebel", Dr. W. Danzer und Klaus Behler, Zeitschrift LASER, Ausgabe 1/87, Seiten 32 bis 36, bekannt. Andere Aufgaben wie der Schutz vor Oxidation, eine metallurgische Optimierung und/oder eine Maximierung der Geschwindigkeit und der Qualität (Spritzer, Poren, Nahtqualität) werden bislang vernachlässigt. Beim Laserstrahlschweißen ist es bekannt, inerte Schutzgase wie Helium oder Argon einzusetzen. Auch Stickstoff wird teilweise verwendet. Vereinzelt werden auch Beimengungen in geringen Mengen zugemischt. In der US 5653896 wird vorgeschlagen beim Plasma- oder Laserschneiden durch entsprechende Gaszugaben eine reduzierende Atmosphäre im Schnitt durch Zugabe von Luft, Sauerstoff, Stickstoff oder Kohlendioxid und Wasserstoff oder Methan herzustellen.

Die Geschwindigkeit der Schweiß- und Schneidprozesse mit dem Laserstrahl ist begrenzt durch die Energiebilanz "eingebrachte Energie - verlorene Energie (Strahlung, Wärmeleitung)". Die Energie des Laserstrahls ist zwar sehr gebündelt, jedoch bei Materialien, die nicht mit Hilfe der exothermen Reaktion mit Sauerstoff geschnitten werden können, der limitierende Parameter.

Beispielsweise beim Schneiden eines 3 mm Stahlblechs mit einem 900 W-Laser und reinem Sauerstoff als Arbeitsgas gehen neben den 900 Watt Energie, die vom Laser kommen, noch 600 Watt, die aus der Verbrennung des Eisens in der Schnittfuge kommen, in den Schneidprozess ein. Man erreicht damit eine Schneidgeschwindigkeit von ungefähr 3 m/min.

Aber beispielsweise beim Schneiden eines 3 mm Chrom-Nickelstahlblechs mit einem 900 Watt-Laser, das wegen der resultierenden Schlacke nicht mit Sauerstoff geschnitten wird, sondern mit einem Inertgas, wie Stickstoff oder Argon, geschnitten werden muss, fehlt diese zusätzliche Energie aus der Reaktion Fe+ ½ O₂ → FeO. Die maximale Schneidgeschwindigkeit geht dementsprechend auf etwa 1,5 m/min zurück.

Der vorliegenden Erfindung liegt daher die Aufgabe zugrunde, ein Prozessgas und ein Verfahren der eingangs genannten Art aufzuzeigen, welche ein verbessertes Laserbearbeiten erlauben. Dabei wird beim Laserstrahlschmelzschneiden eine hohe Schneidgeschwindigkeit angestrebt. Insbesondere soll ein qualitativ hochwertiges, prozesssicheres und reproduzierbares Laserstrahlschmelzschneiden ermöglicht werden. Beim Laserstrahlschweißen wird mit Hilfe des erfindungsgemäßem Prozessgases neben der Kontrolle und Reduzierung des Plasmas eine Maximierung der Geschwindigkeit und der Qualität erreicht. Die Erfindung richtet sich dabei in erster Linie an Fälle, bei denen üblicherweise ein Inertgas als Prozessgas eingesetzt wird.

Diese Aufgabe wird erfindungsgemäß durch Verwendung eines Prozessgases gelöst, welches
- aus einem ternären Gemisch aus Stickstoff, Sauerstoff und Wasserstoff,
- aus einem ternären Gemisch aus Argon, Sauerstoff und Wasserstoff oder
- aus einem ternären Gemisch aus Helium, Sauerstoff und Wasserstoff oder
- aus einem quaternären Gemisch aus Stickstoff, Argon, Sauerstoff und Wasserstoff oder
- aus einem quaternären Gemisch aus Helium, Argon, Sauerstoff und Wasserstoff oder
- aus einem quaternären Gemisch aus Helium, Stickstoff, Sauerstoff und Wasserstoff oder
- aus einem 5-Komponenten-Gemisch aus Helium, Stickstoff, Argon, Sauerstoff und Wasserstoff
besteht oder
- aus Wasserstoff und Luft oder
- aus einem Gasgemisch aus Wasserstoff mit Argon und/oder mit Stickstoff und/oder mit Helium und weiterhin Luft gemischt ist
und wobei der Inertgasanteil, welche aus eine oder mehrere der Gaskomponenten aus der Gruppe Stickstoff, Argon, und Helium besteht, wenigstens 15 Vol.-% beträgt, sowie Sauerstoff und Wasserstoff zur zusätzlichen Energieeinkopplung am Arbeitsort des Laserstrahls enthalten sind, wobei der Sauerstoffanteil mindestens 0,5 Vol.-% und der Wasserstoffanteil mindestens 1 Vol.-% beträgt.
Die Erfindung beruht auf der Einkoppelung von Energie aus der Reaktion 2 H₂ + O₂→ 2 H₂O in den Ort, wo der Laserstrahl arbeitet.

Die Reaktion 2 H₂ + O₂ bringt verschiedene Vorteile mit sich, die gut mit dem Laserstrahl kombinieren:
1. Sie ist sauber.
2. Sie ist mehr oder weniger reduzierend je nach Mischverhältnis H₂ / O₂.
3. Sie ist sehr schnell.
4. Sie ist energiereich.
5. Sie läuft vor allem dort ab, wo hohe Temperaturen auftreten, d.h. am Bearbeitungsort.

Wird das erfindungsgemäße Prozessgas benutzt, kommen die Metallteile beim Laserstrahlschmelzschneiden blank aus dem Schneidprozess. Beim Laserschweißen bewirkt die Erfindung eine positive Beeinflussung der Plasmabildung.

In Ausgestaltung der Erfindung kann insbesondere ein reduzierend wirkendes Prozessgasgemisch eingesetzt werden. Durch die Wahl des unterstöchiometrischen Verhältnisses von Sauerstoff zu Wasserstoff im Prozessgasgemisch im Hinblick auf die Reaktion 2 H₂ + O₂ → 2 H₂O kann der Grad der reduzierenden Wirkung des Prozessgases bestimmt werden. Das bedeutet, dass je nach Wahl des unterstöchiometrischen Verhältnisses von Sauerstoff zu Wasserstoff im Prozessgas ein mehr oder weniger reduzierendes Prozessgasgemisch verwendet werden kann. Damit ist beim Laserbearbeiten eine wertvolle Möglichkeit der Anpassung an die im Einzelfall vorliegenden Bedingungen einschließlich des zu bearbeitenden Werkstoffs gegeben. Beim Laserstrahlschmelzschneiden hat das reduzierend wirkende Prozessgas zu Folge, dass die Metallteile blank aus dem Schneidprozess kommen.

Mit Vorteil kann das Inertgas im Prozessgas eine oder mehrere der Gaskomponenten aus der Gruppe Stickstoff, Argon und Helium enthalten. Stickstoff wird beim Laserstrahlschmelzschneiden jedoch bevorzugt als Inertgas verwendet.

Erfindungsgemäß kann das Prozessgas einen Anteil an Sauerstoff zwischen 0,5 und 25 Vol.-%, vorzugsweise zwischen 1 und 20 Vol.-%, aufweisen.

Mit Vorteil beträgt der Wasserstoffanteil im Prozessgas zwischen 5 und 60 Vol.-%, vorzugsweise zwischen 10 und 50 Vol.-%.

In Weiterbildung der Erfindung ist das Prozessgas aus einem zumindest Wasserstoff oder Wasserstoff und Inertgas (insbesondere Stickstoff und/oder Argon) enthaltenden Gasgemisch und Luft gemischt.

In Vorteil besteht das Prozessgas zum Laserstrahlschmelzschneiden zum großen Teil aus Stickstoff und Argon. Insbesondere kann das Schneidgas zwischen 20 und 98 Vol.-% Stickstoff und/oder Argon, vorzugsweise zwischen 30 und 95 Vol.-% Stickstoff und/oder Argon, aufweisen. Möglich ist auch, dass in den genannten Inertgasmengen weitere Gase außer Stickstoff und Argon enthalten sind, nämlich Helium.

In Ausgestaltung der Erfindung kann durch Festlegen des Verhältnisses von Sauerstoff zu Wasserstoff im Prozessgas im Hinblick auf die Reaktion 2 H₂ + O₂ → 2 H₂O der Grad der reduzierenden Wirkung des Prozessgases bestimmt werden. Das bedeutet, dass je nach Wahl des unterstöchiometrischen Verhältnisses von Sauerstoff zu Wasserstoff im Prozessgas ein mehr oder weniger reduzierendes Prozessgas verwendet werden kann. Somit kann das Prozessgas an die vorliegenden Bedingungen angepasst werden.

Das Prozessgas kann vorgemischt der Laserbearbeitungsanlage zugeführt werden.

In einer alternativen Ausgestaltung der Erfindung werden zumindest einzelne Komponenten des Prozessgasgemisches in der Laserschweiß-/-schneidanlage vor der Schweiß-/Schneiddüse gemischt und/oder in der Schweiß-/Schneiddüse verwirbelt. In diesem Fall enthält die Schweiß-/Schneidanlage bzw. die Schweiß-/Schneiddüse entsprechend geeignete Mittel, insbesondere Einbauten als Strömungsleitmittel.

Das erfindungsgemäße Verfahren eignet sich beim Laserstrahlschmelzschneiden bei Werkstoffen, die sich nicht mit dem Laserstrahlbrennschneidverfahren schneiden lassen. Die Erfindung erlaubt ein qualitativ hochwertiges und reproduzierbares Schneiden mit erhöhter Schneidgeschwindigkeit durch Laserstrahlschmelzen und hat sich als prozesssicher gezeigt. Femer führt die Erfindung zu einer Verbesserung des Lochstechens beim Laserstrahlschmelzschneiden.

Das erfindungsgemäße Verfahren eignet sich beim Laserschweißen für beschichtete Werkstoffe, vor allem für Stähle, insbesondere für verzinkte Stähle. Versuche an verzinkten Blechen brachten sehr gute Ergebnisse. Die Geschwindigkeit kann teilweise deutlich gesteigert werden.

Die Erfindung macht in der Regel keine Modifikationen bestehender Lasergeräte und Armaturen erforderlich.

Die Erfindung kann im Zusammenhang mit allen Arten von Lasern zur Anwendung kommen. Vor allem eignet sie sich für den Einsatz bei der Laserbearbeitung mit Nd-YAG-Laser, Dioden-Laser und CO₂-Laser.

Am Beispiel des Laserstrahlschmelzschneiden lässt sich mit Hilfe der Energiebilanz zeigen, wieviel zusätzliche Energie für den Laserschneidprozess mit Hilfe der Erfindung bereitgestellt werden kann.

Es wird mit folgenden Gasmengen gearbeitet:
- 6 m³/h Gemisch 50% H₂ / N₂ und 5 m³/h Druckluft.

Resultierendes Gemisch am Schneidort:
- 11m³/h mit ungefähr 10% O₂, 30% H₂ und 60% N₂.

Bei der Verbrennung der 10% O₂ in diesem Gemisch werden pro Stunde 255.000 kJ frei, was eine zusätzliche Leistung von 70 kW bedeutet. Wenn nur 1/100 dieser Leistung in der Schnittfuge wirksam wird, bedeutet das, dass die Gesamtleistung des Laserschneidprozesses dadurch fast verdoppelt wird.

## Patentansprüche

1. Verfahren zum Laserbearbeiten von Werkstoffen, wie Laserschweißen oder Laserstrahlschmelzschneiden, wobei ein fokussierter Laserstrahl auf die zu bearbeitende Werkstückoberfläche geführt wird und ein Prozessgasstrom gegen die Werkstückoberfläche geleitet wird, wobei das Prozessgas
• aus einem ternären Gemisch aus Stickstoff, Sauerstoff und Wasserstoff,
• aus einem ternären Gemisch aus Argon, Sauerstoff und Wasserstoff oder
• aus einem ternären Gemisch aus Helium, Sauerstoff und Wasserstoff oder
• aus einem quaternären Gemisch aus Stickstoff, Argon, Sauerstoff und Wasserstoff oder
• aus einem quaternären Gemisch aus Helium, Argon, Sauerstoff und Wasserstoff oder
• aus einem quaternären Gemisch aus Helium, Stickstoff, Sauerstoff und Wasserstoff oder
• aus einem 5-Komponenten-Gemisch aus Helium, Stickstoff, Argon, Sauerstoff und Wasserstoff
besteht oder
• aus Wasserstoff und Luft oder
• aus einem Gasgemisch aus Wasserstoff mit Argon und/oder mit Stickstoff und/oder mit Helium und weiterhin Luft gemischt ist
und wobei der Inertgasanteil, welche aus eine oder mehrere der Gaskomponenten aus der Gruppe Stickstoff, Argon, und Helium besteht, wenigstens15 Vol.-% beträgt, sowie Sauerstoff und Wasserstoff zur zusätzlichen Energieeinkopplung am Arbeitsort des Laserstrahls enthalten sind, wobei der Sauerstoffanteil mindestens 0,5 Vol.-% und der Wasserstoffanteil mindestens 1 Vol.-% beträgt.

2. Verfahren nach Anspruch 1, **dadurch gekennzeichnet, dass** der Sauerstoffanteil im Prozessgas im Verhältnis zum Wasserstoffanteil im Hinblick auf die Reaktion 2 H₂ + O₂ → 2 H₂O unterstöchiometrisch gewählt ist.

3. Verfahren nach Anspruch 1 oder 2, **dadurch gekennzeichnet, dass** der Sauerstoffanteil zwischen 0,5 und 25 Vol.-%, vorzugsweise zwischen 1 und 20 Vol.-%, beträgt.

4. Verfahren nach einem der Ansprüche 1 bis 3, **dadurch gekennzeichnet, dass** der Wasserstoffanteil im Prozessgas zwischen 5 und 60 Vol.-%, vorzugsweise zwischen 10 und 50 Vol.-%, beträgt.

5. Verfahren nach einem der Ansprüche 1 bis 4 zum Laserstrahlschmelzschneiden, **dadurch gekennzeichnet, dass** das Prozessgas zwischen 20 und 98 Vol.-% Stickstoff und/oder Argon, vorzugsweise zwischen 30 und 95 Vol.-% Stickstoff und/oder Argon enthält.

6. Verfahren nach einem der Ansprüche 1 bis 5, **dadurch gekennzeichnet, dass** durch die Wahl des unterstöchiometrischen Verhältnisses von Sauerstoff zu Wasserstoff im Prozessgas im Hinblick auf die Reaktion 2 H₂ + O₂→ H₂O der Grad der reduzierenden Wirkung des Prozessgases bestimmt wird.

7. Verfahren nach einem der Ansprüche 1 bis 6, **dadurch gekennzeichnet, dass** das Prozessgas vorgemischt der Laserbearbeitungsanlage zugeführt wird.

8. Verfahren nach einem der Ansprüche 1 bis 6, **dadurch gekennzeichnet, dass** zumindest einzelne Komponenten des Prozessgases in der Laserbearbeitungsanlage vor der Schweiß-/Schneiddüse gemischt und/oder in der Schweiß-/Schneiddüse verwirbelt werden.

9. Verfahren nach einem der Ansprüche 1 bis 8 zum Laserstrahlschmelzschneiden von Werkstoffen, die sich nicht mit dem Laserstrahlbrennschneidverfahren schneiden lassen.

10. Verfahren nach einem der Ansprüche 1 bis 8 zum Laserstrahlschweißen beschichteter Werkstoffe, vor allem für Stähle, insbesondere verzinkte Stähle.

## Claims

1. Process for the laser machining of materials, such as laser welding or laser beam fusion cutting, a focused laser beam being guided onto the workpiece surface to be machined and a process gas stream being led towards the workpiece surface, the process gas comprising
• a ternary mixture of nitrogen, oxygen and hydrogen,
• a ternary mixture of argon, oxygen and hydrogen or
• a ternary mixture of helium, oxygen and hydrogen or
• a quaternary mixture of nitrogen, argon, oxygen and hydrogen or
• a quaternary mixture of helium, argon, oxygen and hydrogen or
• a quaternary mixture of helium, nitrogen, oxygen and hydrogen or
• a five-component mixture of helium, nitrogen, argon, oxygen and hydrogen or
being mixed from a mixture of
• hydrogen and air or
• a gas mixture of hydrogen with argon and/or with nitrogen and/or with helium and also with air,
and the proportion of inert gas, which comprises one or more of the gas components from the group nitrogen, argon and helium, being at least 15% by volume, and oxygen and hydrogen being contained for the additional injection of energy at the working location of the laser beam, the proportion of oxygen being at least 0.5% by volume and the proportion of hydrogen being at least 1% by volume.

2. Process according to Claim 1, **characterized in that** the proportion of oxygen in the process gas as a ratio of the proportion of hydrogen is chosen to be sub-stoichiometric with regard to the reaction 2 H₂ + O₂ → 2 H₂O.

3. Process according to Claim 1 or 2, **characterized in that** the proportion of oxygen is between 0.5 and 25% by volume, preferably between 1 and 20% by volume.

4. Process according to one of Claims 1 to 3, **characterized in that** the proportion of hydrogen in the process gas is between 5 and 60% by volume, preferably between 10 and 50% by volume.

5. Process according to one of Claims 1 to 4 for laser beam fusion cutting, **characterized in that** the process gas contains between 20 and 98% by volume of nitrogen and/or argon, preferably between 30 and 95% by volume of nitrogen and/or argon.

6. Process according to one of Claims 1 to 5, **characterized in that** the level of the reducing action of the process gas is determined by choosing the sub-stoichiometric ratio of oxygen to hydrogen in the process gas with regard to the reaction 2 H₂ + O₂ → 2 H₂O.

7. Process according to one of Claims 1 to 6, **characterized in that** the process gas is supplied in premixed form to the laser machining system.

8. Process according to one of Claims 1 to 6, **characterized in that** at least individual components of the process gas in the laser processing system are mixed upstream of the welding/cutting nozzle and/or are swirled in the welding/cutting nozzle.

9. Process according to one of Claims 1 for 8 for the laser beam fusion cutting of materials which cannot be cut by the laser beam burning cutting method.

10. Process according to one of Claims 1 to 8 for the laser beam welding of coated materials, above all for steels, in particular galvanized steels.

## Revendications

1. Procédé de traitement de matériaux par laser, par exemple par soudage au laser ou découpe et fusion par faisceau laser, dans lequel un faisceau laser concentré est amené à la surface de la pièce à traiter et un écoulement de gaz de processus est amené sur la surface de la pièce, dans lequel le gaz de processus est constitué :
- d'un mélange ternaire d'azote, d'oxygène et d'hydrogène,
- d'un mélange ternaire d'argon, d'oxygène et d'hydrogène ou
- d'un mélange ternaire d'hélium, d'oxygène et d'hydrogène ou
- d'un mélange quaternaire d'azote, d'argon, d'oxygène et d'hydrogène ou
- d'un mélange quaternaire d'hélium, d'argon, d'oxygène et d'hydrogène ou
- d'un mélange quaternaire d'hélium, d'azote, d'oxygène et d'hydrogène ou
- d'un mélange à 5 composants d'hélium, d'azote, d'argon, d'oxygène et d'hydrogène,
ou
- est constitué d'hydrogène et d'air ou
- est constitué d'un mélange de gaz constitué d'hydrogène et d'argon et/ou d'azote et/ou d'hélium et en outre d'air,
et dans lequel la teneur en gaz inertes constitués d'un ou plusieurs des composants gazeux de l'ensemble formé par l'azote, l'argon et l'hélium, est d'au moins 15 % en volume, l'oxygène et l'hydrogène étant présents à l'emplacement de travail du faisceau laser pour augmenter le couplage énergétique, la teneur en oxygène étant d'au moins 0,5 % en volume et la teneur en hydrogène d'au moins 1 % en volume.

2. Procédé selon la revendication 1, **caractérisé en ce que** dans le gaz de processus, la teneur en oxygène par rapport à la teneur en hydrogène est sélectionnée à une valeur sous-stoechiométrique par rapport à la réaction 2 H₂ + O₂ → 2 H₂O.

3. Procédé selon les revendications 1 ou 2, **caractérisé en ce que** la teneur en oxygène est comprise entre 0,5 et 25 % en volume et de préférence entre 1 et 20 % en volume.

4. Procédé selon l'une des revendications 1 à 3, **caractérisé en ce que** la teneur en hydrogène dans le gaz de processus est comprise entre 5 et 60 % en volume et de préférence entre 10 et 50 % en volume.

5. Procédé selon l'une des revendications 1 à 4, pour la découpe et la fusion par faisceau laser, **caractérisé en ce que** le gaz de processus contient entre 20 et 98 % en volume d'azote et/ou d'argon, et de préférence entre 30 et 95 % en volume d'azote et/ou d'argon.

6. Procédé selon l'une des revendications 1 à 5, **caractérisé en ce que** le degré d'effet réducteur du gaz de processus est déterminé par la sélection dans le gaz de processus d'un rapport sous-stoechiométrique entre l'oxygène et l'hydrogène par rapport à l'équation 2 H₂ + O₂ → 2 H₂O.

7. Procédé selon l'une des revendications 1 à 6, **caractérisé en ce que** le gaz de processus est apporté dans l'installation de traitement par laser après avoir été pré-mélangé.

8. Procédé selon l'une des revendications 1 à 6, **caractérisé en ce qu'**au moins certains composants du gaz de processus sont mélangés dans l'installation de traitement par laser en amont de l'ajutage de soudage/découpe et/ou sont mis en tourbillonnage dans l'ajutage de soudage/découpe.

9. Procédé selon l'une des revendications 1 à 8, pour la découpe et la fusion par faisceau laser de matériaux qui ne peuvent être découpés par le procédé de découpe par combustion à l'aide d'un faisceau laser.

10. Procédé selon l'une des revendications 1 à 8, pour le soudage par faisceau laser de matériaux revêtus, et surtout d'aciers et en particulier d'aciers galvanisés.
